# FASCICULE DE BREVET EUROPEEN

(11) **EP 3 025 905 B1**
(45) Date de publication et mention de la délivrance du brevet: **13.09.2017**
(21) Numéro de dépôt: 15196136.4
(22) Date de dépôt: 24.11.2015
(51) Int. Cl.: B60N 2/48

(54) **SYSTÈME DE MONTAGE D'UN APPUI-TÊTE DE SIÈGE DE VÉHICULE AUTOMOBILE**
MONTAGESYSTEM FÜR KOPFSTÜTZENVORRICHTUNG EINES KRAFTFAHRZEUGSITZES
HEADREST MOUNTING SYSTEM FOR A MOTOR VEHICLE SEAT

(30) Priorité: 25.11.2014 FR 1461439
(43) Date de publication de la demande: 01.06.2016
(73) Titulaire: Cera TSC, 75008 Paris (FR)
(72) Inventeur: HORNY, Frédéric, 51100 Reims (FR); DAUCHEZ, Fernand, 02400 Bezu Saint Germain (FR); ZEDIAR, Ahmed, 51100 Reims (FR); GANIER, David, 02190 Guignicourt (FR)
(74) Mandataire: Sayettat, Julien Christian

(56) Documents cités:
- WO-A1-2014/023843
- FR-A1- 2 895 709
- FR-A1- 2 907 390

## Description

L'invention concerne un système de montage d'un appui-tête de siège de véhicule automobile.

Il est connu de réaliser un système de montage d'un appui-tête de siège de véhicule automobile, ledit système comprenant :
- deux tiges de montage dudit appui-tête sur un dossier dudit siège, les extrémités supérieures desdites tiges étant reliées entre elles par une traverse, au moins une desdites tiges comprenant au moins un cran de blocage en coulissement,
- au moins une gaine de réception d'une tige crantée en coulissement, ladite gaine comprenant un manchon de coulissement et, solidaire dudit manchon, un tiroir monté mobile en translation radiale, ledit tiroir étant contraint en translation vers ledit manchon par un moyen de rappel élastique, ledit tiroir étant pourvu d'un bord de crantage, ledit bord étant agencé pour pouvoir s'engager, sous l'effet dudit moyen de rappel, dans ledit cran lorsqu'ils sont en regard l'un de l'autre, afin de bloquer ladite tige en coulissement,
- un moyen de réception en emboitement de ladite gaine, ledit moyen étant destiné à être monté en haut de dossier dudit siège.
Le document WO 2014/023843 A1 divulgue un système de montage d'appui-tête selon le préambule de la revendication 1. En cas de choc violent de la tête du passager contre l'appui-tête, il peut se produire, avec certaines configurations de traverses, une rotation de la tige crantée par rapport au bord de crantage, par « effet de manivelle » réalisé par un impact situé en regard de la traverse, le bord de crantage risquant alors de s'extraire du cran, ce qui peut entraîner un déblocage du coulissement de ladite tige et un risque d'affaissement ou d'éjection de l'appui-tête dans le véhicule, une telle situation pouvant être préjudiciable à la sécurité du passager.

L'invention a pour but de pallier cet inconvénient.

A cet effet, l'invention propose un système de montage d'un appui-tête de siège de véhicule automobile, ledit système comprenant :
- deux tiges de montage dudit appui-tête sur un dossier dudit siège, les extrémités supérieures desdites tiges étant reliées entre elles par une traverse, au moins une desdites tiges comprenant au moins un cran de blocage en coulissement,
- au moins une gaine de réception d'une tige crantée en coulissement, ladite gaine comprenant un manchon de coulissement et, solidaire dudit manchon, un tiroir monté mobile en translation radiale, ledit tiroir étant contraint en translation vers ledit manchon par un moyen de rappel élastique, ledit tiroir étant pourvu d'un bord de crantage, ledit bord étant agencé pour pouvoir s'engager, sous l'effet dudit moyen de rappel, dans ledit cran lorsqu'ils sont en regard l'un de l'autre, afin de bloquer ladite tige en coulissement,
- un moyen de réception en emboitement de ladite gaine, ledit moyen étant destiné à être monté en haut de dossier dudit siège,
ledit système présentant en outre les caractéristiques suivantes :
- ladite tige crantée et ledit manchon sont respectivement agencés pour se coupler en rotation axiale autour de l'axe médian selon lequel s'étend ladite tige introduite en coulissement dans ledit manchon,
- ladite gaine et ledit moyen de réception sont respectivement agencés pour que ladite gaine puisse pivoter en rotation axiale autour dudit axe médian dans ledit moyen de réception de part et d'autre de sa position angulaire de référence correspondant audit appui-tête disposé en condition d'utilisation,
de sorte que le crantage dudit bord dans ledit cran subsiste en cas de rotation axiale de ladite tige crantée autour dudit axe médian.

Dans cette description, les termes de positionnement dans l'espace (supérieur, avant, vertical,...) sont pris en référence au système disposé dans le véhicule.

Les termes « axial » et « radial » sont pris en référence à l'axe médian selon lequel s'étend la tige introduite en coulissement dans le manchon.

Une rotation axiale est donc une rotation réalisée autour de cet axe.

Une translation radiale se fait quant à elle perpendiculairement à cet axe.

Avec l'agencement proposé, le crantage du bord dans ledit cran subsiste en cas de rotation axiale de la tige crantée, ceci du fait que ladite tige entraine la gaine - et donc le tiroir et son bord de crantage - en rotation , ce qui évite un déblocage du coulissement de ladite tige et un risque d'affaissement ou d'éjection de l'appui-tête dans le véhicule.

D'autres particularités et avantages de l'invention apparaîtront dans la description qui suit, faite en référence aux figures jointes, dans lesquelles :
- la figure 1 est une vue en perspective d'un ensemble de deux tiges reliées par une traverse selon un mode de réalisation,
- la figure 2 est une vue schématique en coupe verticale partielle d'un système selon une réalisation, ledit système étant disposé dans son environnement véhicule,
- les figures 3 sont des vues schématiques en coupe radiale du système de la figure 2, la gaine étant en position angulaire de référence (3a) et en position angulaire où les moyens de butée réciproques coopèrent entre eux (3b),
- la figure 4 est une vue schématique en coupe radiale du système des figures 2 et 3 selon un agencement permettant d'éviter une erreur de montage des gaines.

En référence aux figures, on décrit un système 1 de montage d'un appui-tête de siège de véhicule automobile, ledit système comprenant :
- deux tiges 2 de montage dudit appui-tête sur un dossier dudit siège, les extrémités supérieures desdites tiges étant reliées entre elles par une traverse 3, au moins une desdites tiges comprenant au moins un cran 4 de blocage en coulissement,
- au moins une gaine de réception 6 d'une tige 2 crantée en coulissement, ladite gaine comprenant un manchon 7 de coulissement et, solidaire dudit manchon, un tiroir 8 monté mobile en translation radiale, ledit tiroir étant contraint en translation vers ledit manchon par un moyen de rappel 9 élastique, ledit tiroir étant pourvu d'un bord de crantage 10, ledit bord étant agencé pour pouvoir s'engager, sous l'effet dudit moyen de rappel, dans ledit cran lorsqu'ils sont en regard l'un de l'autre, afin de bloquer ladite tige en coulissement,
- un moyen de réception 15 en emboitement de ladite gaine, ledit moyen étant destiné à être monté en haut de dossier dudit siège,
ledit système présentant en outre les caractéristiques suivantes :
- ladite tige crantée et ledit manchon sont respectivement agencés pour se coupler en rotation axiale autour de l'axe médian selon lequel s'étend ladite tige introduite en coulissement dans ledit manchon,
- ladite gaine et ledit moyen de réception sont respectivement agencés pour que ladite gaine puisse pivoter en rotation axiale autour dudit axe médian dans ledit moyen de réception de part et d'autre de sa position angulaire de référence correspondant audit appui-tête disposé en condition d'utilisation,
de sorte que le crantage dudit bord dans ledit cran subsiste en cas de rotation axiale de ladite tige crantée autour dudit axe médian.

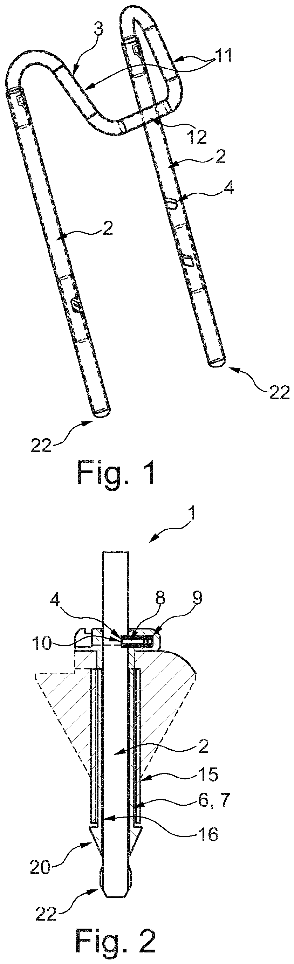

Comme on le voit sur la figure 2, la gaine 6 est maintenue dans le moyen de réception 15 par une saillie inférieure en harpon 20.

Selon la réalisation représentée, la gaine 6 et le moyen de réception 15 sont pourvus de moyens réciproques de butée 17,18 respectivement agencés pour contenir la rotation de ladite gaine dans une plage angulaire totale 21 donnée de part et d'autre de sa position de référence.

Les moyens réciproques de butée sont ici sous forme d'un ergot 17 prévu sur la gaine 6, ledit ergot pouvant coulisser dans une lumière 19 prévue dans le moyen de réception 15, ledit ergot venant en butée contre les extrémités 18 de ladite lumière lorsque ladite gaine est actionnée en rotation de part ou d'autre de sa position de référence.

Selon une réalisation, la plage angulaire totale 21 est inférieure à 40° et s'étend symétriquement de part et d'autre de la position de référence de la gaine 6.

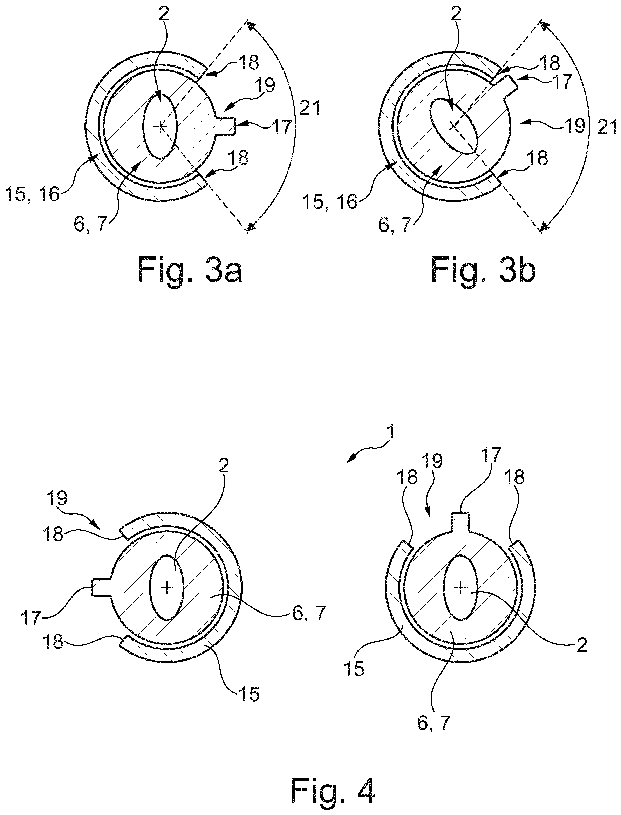

Selon l'agencement partiellement représenté en figure 4, on prévoit que :
- les deux tiges 2 sont reçues dans deux gaines respectives 6 pourvues chacune d'un manchon 7, une seule desdites tiges comprenant au moins un cran 4 de blocage en coulissement, un seul desdits manchons étant pourvu d'un tiroir 8 monté mobile en translation radiale, ledit tiroir étant contraint en translation vers ledit manchon par un moyen de rappel 9 élastique, ledit tiroir étant pourvu d'un bord de crantage 10, ledit bord étant agencé pour pouvoir s'engager, sous l'effet dudit moyen de rappel, dans ledit cran lorsqu'ils sont en regard l'un de l'autre
- les tiges 2 et manchons 7 correspondants sont respectivement agencés pour se coupler en rotation axiale,
- chaque gaine 6 est reçue dans un moyen de réception 15, chacune desdites gaines et chacun desdits moyens étant respectivement agencés pour que ladite gaine puisse pivoter en rotation axiale dans ledit moyen de part et d'autre de sa position angulaire de référence, un ergot 17 étant prévu sur chaque gaine 6, ledit ergot pouvant coulisser dans une lumière 19 prévue dans chaque moyen de réception 15, ledit ergot venant en butée contre les extrémités 18 de ladite lumière lorsque ladite gaine est actionnée en rotation de part ou d'autre de sa position de référence,
la lumière 19 d'un moyen de réception 15 étant décalée angulairement - notamment de 90° - par rapport à celle 19 de l'autre moyen 15.

De la sorte, il n'est pas possible de monter l'appui-tête sur le dossier de siège si on a permuté par erreur en haut de dossier une gaine 6 pourvu d'un tiroir 8 avec une gaine 6 qui en est dépourvue.

Comme représenté en figures 3, la tige 2 crantée présente une section ovale, le manchon 7 présentant un conduit 16 de section analogue de manière à permettre le couplage en rotation.

Selon la réalisation représentée, le bas 22 de tige crantée 2 présente une forme fuselée agencée pour permettre son introduction dans la gaine 6 dans toutes les positions angulaires qu'elle peut adopter.

Comme représenté en figures 3, l'enveloppe extérieure du manchon 7 s'inscrit généralement dans un cylindre, le moyen de réception 15 présentant une section circulaire analogue de manière à permettre la rotation axiale de la gaine 6 dans ledit moyen.

Selon le mode de réalisation représenté en figure 2, le moyen de réception 15 présente une forme générale de conduit tubulaire.

Selon la réalisation représentée en figure 1, les tiges 2 sont à base de tube métallique, la traverse 3 étant sous forme d'une pièce séparée emboitée sur lesdites tiges.

En variante non représentée, les tiges 2 et la traverse 3 peuvent être formées d'une seule pièce à base d'un tube métallique replié.

Selon la réalisation représentée, la traverse 3 est en forme générale de U renversé replié vers l'avant, les branches 11 du U se rapprochant l'une de l'autre à mesure qu'on se rapproche de la partie médiane 12 du U.

Le rapprochement des branches 11 du U l'une de l'autre correspond à la nécessité de disposer d'un espace interbranches réduit en regard de la tête du passager, afin de réduire les risques de blessure.

Dans une telle réalisation, la tête peut être amenée, en cas d'accident du véhicule, à heurter l'appui-tête de façon décalée par rapport à sa zone médiane. Il en résulte un risque d'« effet de manivelle », par le biais de la traverse 3, induisant une rotation des tiges 2.

## Revendications

1. Système (1) de montage d'un appui-tête de siège de véhicule automobile, ledit système comprenant :
• deux tiges (2) de montage dudit appui-tête sur un dossier dudit siège, les extrémités supérieures desdites tiges étant reliées entre elles par une traverse (3), au moins une desdites tiges comprenant au moins un cran (4) de blocage en coulissement,
• au moins une gaine de réception (6) d'une tige (2) crantée en coulissement, ladite gaine comprenant un manchon (7) de coulissement et, solidaire dudit manchon, un tiroir (8) monté mobile en translation radiale, ledit tiroir étant contraint en translation vers ledit manchon par un moyen de rappel (9) élastique, ledit tiroir étant pourvu d'un bord de crantage (10), ledit bord étant agencé pour pouvoir s'engager, sous l'effet dudit moyen de rappel, dans ledit cran lorsqu'ils sont en regard l'un de l'autre, afin de bloquer ladite tige en coulissement,
• un moyen de réception (15) en emboitement de ladite gaine, ledit moyen étant destiné à être monté en haut de dossier dudit siège,
ledit système étant **caractérisé en ce que** :
• ladite tige crantée et ledit manchon sont respectivement agencés pour se coupler en rotation axiale autour de l'axe médian selon lequel s'étend ladite tige introduite en coulissement dans ledit manchon,
• ladite gaine et ledit moyen de réception sont respectivement agencés pour que ladite gaine puisse pivoter en rotation axiale autour dudit axe médian dans ledit moyen de réception de part et d'autre de sa position angulaire de référence correspondant audit appui-tête disposé en condition d'utilisation,
de sorte que le crantage dudit bord dans ledit cran subsiste en cas de rotation axiale de ladite tige crantée autour dudit axe médian.

2. Système selon la revendication 1, **caractérisé en ce que** la gaine (6) et le moyen de réception (15) sont pourvus de moyens réciproques de butée (17,18) respectivement agencés pour contenir la rotation de ladite gaine dans une plage angulaire totale (21) donnée de part et d'autre de sa position de référence, ladite plage étant notamment inférieure à 40° et s'étendant notamment symétriquement de part et d'autre de ladite position de référence.

3. Système selon la revendication 2, **caractérisé en ce que** les moyens réciproques de butée sont sous forme d'un ergot (17) prévu sur la gaine (6), ledit ergot pouvant coulisser dans une lumière (19) prévue dans le moyen de réception (15), ledit ergot venant en butée contre les extrémités (18) de ladite lumière lorsque ladite gaine est actionnée en rotation de part ou d'autre de sa position de référence.

4. Système selon la revendication 3, **caractérisé en ce que** :
• les deux tiges (2) sont reçues dans deux gaines respectives (6) pourvues chacune d'un manchon (7), une seule desdites tiges comprenant au moins un cran (4) de blocage en coulissement, un seul desdits manchons étant pourvu d'un tiroir (8) monté mobile en translation radiale, ledit tiroir étant contraint en translation vers ledit manchon par un moyen de rappel (9) élastique, ledit tiroir étant pourvu d'un bord de crantage (10), ledit bord étant agencé pour pouvoir s'engager, sous l'effet dudit moyen de rappel, dans ledit cran lorsqu'ils sont en regard l'un de l'autre,
• les tiges (2) et manchons (7) correspondants sont respectivement agencés pour se coupler en rotation axiale,
• chaque gaine (6) est reçue dans un moyen de réception (15), chacune desdites gaines et chacun desdits moyens étant respectivement agencés pour que ladite gaine puisse pivoter en rotation axiale dans ledit moyen de part et d'autre de sa position angulaire de référence, un ergot (17) étant prévu sur chaque gaine (6), ledit ergot pouvant coulisser dans une lumière (19) prévue dans chaque moyen de réception (15), ledit ergot venant en butée contre les extrémités (18) de ladite lumière lorsque ladite gaine est actionnée en rotation de part ou d'autre de sa position de référence.
la lumière (19) d'un moyen de réception (15) étant décalée angulairement, notamment de 90°, par rapport à celle (19) de l'autre moyen (15).

5. Système selon l'une quelconque des revendications 1 à 4, **caractérisé en ce que** la tige (2) crantée présente une section ovale, le manchon (7) présentant un conduit (16) de section analogue de manière à permettre le couplage en rotation.

6. Système selon l'une quelconque des revendications 2 à 5, **caractérisé en ce que** le bas (22) de tige crantée (2) présente une forme fuselée agencée pour permettre son introduction dans la gaine (6) dans toutes les positions angulaires qu'elle peut adopter.

7. Système selon l'une quelconque des revendications 1 à 6, **caractérisé en ce que** l'enveloppe extérieure du manchon (7) s'inscrit généralement dans un cylindre, le moyen de réception (15) présentant une section circulaire analogue de manière à permettre la rotation axiale de la gaine (6) dans ledit moyen.

8. Système selon l'une quelconque des revendications 1 à 7, **caractérisé en ce que** les tiges (2) sont à base de tube métallique, la traverse (3) étant sous forme d'une pièce séparée emboitée sur lesdites tiges.

9. Système selon l'une quelconque des revendications 1 à 7, **caractérisé en ce que** les tiges (2) et la traverse (3) sont formées d'une seule pièce à base d'un tube métallique replié.

10. Système selon l'une quelconque des revendications 8 ou 9, **caractérisé en ce que** la traverse (3) est en forme générale de U renversé replié vers l'avant, les branches (11) du U se rapprochant l'une de l'autre à mesure qu'on se rapproche de la partie médiane (12) du U.

## Patentansprüche

1. System (1) zur Montage einer Kopfstütze eines Kraftfahrzeugsitzes, wobei das System Folgendes umfasst:
- zwei Stangen (2) zur Montage der Kopfstütze an einer Rückenlehne des Sitzes, wobei die oberen Enden der Stangen untereinander über eine Traverse (3) verbunden sind, wobei mindestens eine der Stangen mindestens eine Rastkerbe (4) zum Arretieren beim Gleiten umfasst,
- mindestens ein Aufnahmehüllrohr (6) zum gleitenden Aufnehmen einer Stange (2) mit Rastkerben, wobei das Hüllrohr eine Gleithülse (7) und, fest mit der Hülse verbunden, einen radial translatorisch beweglich montierten Schieber (8) umfasst, wobei der Schieber von einem federnden Rückstellmittel (9) translatorisch zu der Hülse hin gepresst wird, wobei der Schieber mit einer Rastkante (10) versehen ist, wobei die Kante so gestaltet ist, dass sie unter der Wirkung des Rückstellmittels in die Rastkerbe eingreifen kann, wenn sie einander gegenüber liegen, um die Stange beim Gleiten zu arretieren,
- ein Aufnahmemittel (15) zur Steckaufnahme des Hüllrohrs, wobei das Mittel dazu bestimmt ist, oben an der Rückenlehne des Sitzes montiert zu werden,
wobei das System **dadurch gekennzeichnet ist, dass**:
- die Stange mit Rastkerben und die Hülse jeweils so gestaltet sind, dass sie sich in axialer Drehung um die Mittelachse, entlang der sich die in die Hülse gleitend eingeführte Stange erstreckt, koppeln,
- das Hüllrohr und das Aufnahmemittel jeweils so gestaltet sind, dass das Hüllrohr in axialer Drehung um die Mittelachse in dem Aufnahmemittel beidseits seiner Referenzwinkelposition, die der im Verwendungszustand angeordneten Kopfstütze entspricht, schwenken kann,
so dass das Einrasten der Kante in die Rastkerbe im Fall der axialen Drehung der Stange mit Rastkerben um die Mittelachse fortbesteht.

2. System nach Anspruch 1, **dadurch gekennzeichnet, dass** das Hüllrohr (6) und das Aufnahmemittel (15) mit gegenseitigen Anschlagmitteln (17, 18) versehen sind, die jeweils so gestaltet sind, dass sie die Drehung des Hüllrohrs in einem gegebenen vollen Winkelbereich (21) beidseits seiner Referenzposition begrenzen, wobei der Bereich insbesondere kleiner als 40° ist und sich insbesondere symmetrisch beidseits der Referenzposition erstreckt.

3. System nach Anspruch 2, **dadurch gekennzeichnet, dass** die gegenseitigen Anschlagmittel in Form einer Nase (17) vorliegen, die an dem Hüllrohr (6) vorgesehen ist, wobei die Nase in einem Spalt (19) gleiten kann, der in dem Aufnahmemittel (15) vorgesehen ist, wobei die Nase an die Enden (18) des Spalts anschlägt, wenn das Hüllrohr zur einen oder zur anderen Seite seiner Referenzposition drehbetätigt wird.

4. System nach Anspruch 3, **dadurch gekennzeichnet, dass**:
- die beiden Stangen (2) in zwei jeweiligen Hüllrohren (6) aufgenommen sind, von denen jedes mit einer Hülse (7) versehen ist, wobei nur eine der Stangen mindestens eine Rastkerbe (4) zum Arretieren beim Gleiten umfasst, wobei nur eine der Hülsen mit einem radial translatorisch beweglich montierten Schieber (8) versehen ist, wobei der Schieber von einem federnden Rückstellmittel (9) translatorisch zu der Hülse hin gepresst wird, wobei der Schieber mit einer Rastkante (10) versehen ist, wobei die Kante so gestaltet ist, dass sie unter der Wirkung des Rückstellmittels in die Rastkerbe eingreifen kann, wenn sie einander gegenüber liegen,
- die Stangen (2) und die entsprechenden Hülsen (7) jeweils so gestaltet sind, dass sie sich in axialer Drehung koppeln,
- jedes Hüllrohr (6) in einem Aufnahmemittel (15) aufgenommen ist, wobei jedes der Hüllrohre und jedes der Mittel jeweils so gestaltet ist, dass das Hüllrohr in axialer Drehung beidseits seiner Referenzwinkelposition in dem Mittel schwenken kann, wobei an jedem Hüllrohr (6) eine Nase (17) vorgesehen ist, wobei die Nase in einem in jedem Aufnahmemittel (15) vorgesehenen Spalt (19) gleiten kann, wobei die Nase an die Enden (18) des Spalts anschlägt, wenn das Hüllrohr zur einen oder zur anderen Seite seiner Referenzposition drehbetätigt wird,
wobei der Spalt (19) eines Aufnahmemittels (15) winklig, insbesondere um 90°, in Bezug auf denjenigen (19) des anderen Mittels (15) versetzt ist.

5. System nach einem beliebigen der Ansprüche 1 bis 4, **dadurch gekennzeichnet, dass** die Stange (2) mit Rastkerben einen ovalen Querschnitt aufweist, wobei die Hülse (7) einen Kanal (16) mit gleichem Querschnitt aufweist, um die drehende Kopplung zu ermöglichen.

6. System nach einem beliebigen der Ansprüche 2 bis 5, **dadurch gekennzeichnet, dass** das Unterteil (22) der Stange (2) mit Rastkerben eine spindelartige Form aufweist, die so gestaltet ist, dass ihr Einführen in das Hüllrohr (6) in allen Winkelpositionen, die sie einnehmen kann, ermöglicht wird.

7. System nach einem beliebigen der Ansprüche 1 bis 6, **dadurch gekennzeichnet, dass** der äußere Mantel der Hülse (7) allgemein in einen Zylinder einbeschrieben ist, wobei das Aufnahmemittel (15) einen gleichen kreisförmigen Querschnitt aufweist, um die axiale Drehung des Hüllrohrs (6) in dem Mittel zu ermöglichen.

8. System nach einem beliebigen der Ansprüche 1 bis 7, **dadurch gekennzeichnet, dass** die Stangen (2) aus Metallrohr bestehen, wobei die Traverse (3) in Form eines separaten Teils vorliegt, das auf die Stangen gesteckt wird.

9. System nach einem beliebigen der Ansprüche 1 bis 7, **dadurch gekennzeichnet, dass** die Stangen (2) und die Traverse (3) einteilig aus einem gebogenen Metallrohr geformt sind.

10. System nach einem beliebigen der Ansprüche 8 oder 9, **dadurch gekennzeichnet, dass** die Traverse (3) die Grundform eines umgekehrten U hat, das nach vorne gebogen ist, wobei die Schenkel (11) des U einander annähern, je weiter man sich dem Mittelteil (12) des U nähert.

## Claims

1. System (1) for assembly of a head rest for an automobile vehicle seat, said system comprising:
- two rods (2) for assembly of said head rest on a back of said seat, the top ends of said rods being connected to each other by a cross-piece (3), at least one of said rods comprising at least one notch (4) prevent sliding,
- at least one reception sheath (6) for a notched sliding rod (2), said sheath comprising a sliding sleeve (7) and a drawer (8) fixed to said sleeve free to move in radial translation, said drawer being constrained in translation towards said sleeve by an elastic return means (9), said drawer being provided with a notched edge (10), said edge being arranged so that it can engage in said notch under the effect of said return means when they are facing each other, to prevent said rod from sliding,
- a reception means (15) into which said sheath fits, said means being designed to be installed at the top of said seat back,
said system being **characterized in that**:
- said notched rod and said sleeve are respectively arranged to couple together in axial rotation around the median axis along which said rod extends after being inserted in said sleeve,
- said sheath and said reception means are respectively arranged such that said sheath can pivot in axial rotation around said median axis in said reception means on each side of its reference angular position corresponding to said head rest placed in a usage condition,
such that the notches on said edge in said notch remain in place in case of axial rotation of said notched rod around said median axis.

2. System according to claim 1, **characterised in that** the sheath (6) and the reception means (15) are provided with reciprocal stop means (17, 18) arranged to restrain rotation of said sheath with a given total angular range (21) on each side of its reference position, said range being particularly less than 40° and in particular extending symmetrically on each side of the reference position.

3. System according to claim 2, **characterised in that** the stop means are in the form of a pin (17) provided on the sheath (6), said pin being capable of sliding in a slot (19) provided in the reception means (15), said pin stopping in contact against the ends (18) of said slot when said sheath is rotated on each side of its reference position.

4. System according to claim 3, **characterised in that**:
- the two rods (2) fit into two sheaths (6) each provided with a sleeve (7), only one of said rods comprising at least one blocking notch (4) preventing sliding, only one of said sleeves being fitted with a drawer (8) installed free to move in mobile translation, said drawer being constrained in translation towards said sleeve by an elastic return means (9), said drawer being provided with a notched edge (10), said edge being arranged so it can engage in said notch under the effect of said return means when the two are facing each other.
- the rods (2) and the corresponding sleeves (7), are arranged to couple together in axial rotation,
- each sheath (6) fits into a reception means (15) each of said sheaths and each of said means being respectively arranged such that said sheath can pivot in axial rotation in said means on each side of its reference angular position, a pin (17) being provided on each sheath (6), said pin being capable of sliding in a slot (19) provided in each reception means (15), said pin stopping against the ends (18) of said slot when said sheath is rotated on each side of its reference position, the slot (19) of a reception means (15) being offset at an angle, particularly 90°, from the slot (19) in the other means (15).

5. System according to any one of claims 1 to 4, **characterised in that** the notched rod (2) has an oval cross-section, the sleeve (7) having a conduit (16) with a corresponding cross-section to enable coupling in rotation.

6. System according to any one of claims 2 to 5, **characterised in that** the bottom (22) of the notched rod (2) has a tapered shape arranged so that it can be inserted in the sheath (6) at any angular position in which it may be.

7. System according to any one of claims 1 to 6, **characterised in that** the outer casing of the sleeve (7) is generally inscribed in a cylinder, the reception means (15) having a corresponding circular shape to enable axial rotation of the sheath (6) in said means.

8. System according to any one of claims 1 to 7, **characterised in that** the rods (2) are based on a metal tube, the cross-piece (3) being in the form of a separate part fitted on said rods.

9. System according to any one of claims 1 to 7, **characterised in that** the rods (2) and the cross-piece (3) are formed from a single piece based on a folded metal tube.

10. System according to either claim 8 or 9, **characterised in that** the cross-piece (3) is in the general shape of a U folded forwards, the branches (11) of the U becoming close to each other with decreasing distance from the median part (12) of the U.
